# EUROPEAN PATENT APPLICATION

(11) **EP 4 194 598 A1**
(43) Date of publication of application: **14.06.2023**
(21) Application number: 22205169.0
(22) Date of filing: 02.11.2022
(51) Int. Cl.: D06F 33/47, D06F 37/42, D06F 34/04, D06F 34/05, D06F 39/08, D06F 39/12, D06F 103/18, D06F 105/02, D06F 105/58, G01M 3/28

(54) **WATER LEAKAGE MANAGEMENT SYSTEM - SENSING ON LOCATION**

(30) Priority: 07.12.2021 US 202163286936 P; 26.10.2022 US 202218049763
(71) Applicant: Whirlpool Corporation, Benton Harbor, MI 49022 (US)
(72) Inventor: Chaulkar, Rasika U., 21024 Cassinetta di Biandronno (VA) (IT); Jawalkar, Namrata N., 21024 Cassinetta di Biandronno (VA) (IT); Magalhaes Silva, Andre Luis, 21024 Cassinetta di Biandronno (VA) (IT); Mallikarjunan, Gobi Krishnan, 21024 Cassinetta di Biandronno (VA) (IT); Paiva Torres, Caroline Ruella, 21024 Cassinetta di Biandronno (VA) (IT); Patil, Vivek Mansing, 21024 Cassinetta di Biandronno (VA) (IT); Murad, Omar Rachid, 21024 Cassinetta di Biandronno (VA) (IT); Rangnekar, Karishma, 21024 Cassinetta di Biandronno (VA) (IT); Rossi Lopes, Elisa Dias, 21024 Cassinetta di Biandronno (VA) (IT); Shinde, Reena P., 21024 Cassinetta di Biandronno (VA) (IT); Vehslage, David R., 21024 Cassinetta di Biandronno (VA) (IT)
(74) Representative: Spina, Alessandro

(57) **Abstract**

Water leakage detection is provided. One or more water sensing devices (114) are placed at different locations with respect to a laundry treatment appliance (102). A computing device (1002), in communication with the one or more water sensing devices (114), is programmed to receive sensor data (706) from the one or more water sensing devices (114), and responsive to the sensor data (706) indicating a leak, performing one or more corrective actions to address the leak.

## Description

### FIELD OF DISCLOSURE

Aspects of the disclosure generally relate to water leakage detection systems for laundry appliance applications.

### DESCRIPTION OF RELATED ART

Laundry treating appliances typically operate to treat laundry items by placing the laundry items in contact with treating fluid such as a detergent/water mixture, sometimes referred to as wash liquor, and providing relative motion between the laundry items and the fluid. The controller can further control a motor to rotate the laundry basket or drum according to one of the preprogrammed cycles of operation. The controller can also control a clothes mover provided within the laundry basket or drum and configured to impart mechanical energy to laundry items within the treating chamber according to a selected cycle of operation. The clothes mover can include multiple components, such as a base, which can be provided as an impeller plate, and a barrel, which can be provided as an agitator post, and which can couple to the base.

### SUMMARY

Laundry treating appliances utilize a water mixture to clean laundry items placed within the appliance. In doing so, fresh water may be received to the appliance, utilized to wash the laundry items, and expelled down a drain once the liquid bath portion of the wash and/or rinse is complete.

Certain locations of laundry treating appliances may be susceptible to leak conditions. This may be due to various causes, such as poorly fastened hoses or deterioration of hoses or fittings. A set of likely locations for monitoring may be used to identify such conditions. For instance, monitoring may be performed by sensors operable to detect leak conditions at one or more of: a connection between an inlet hose and a tap of the home, a connection between the inlet hose and a valve of the laundry treating appliance, an interface between a drain hose and a drain pipe, a door of a horizontal washer, and underneath a cabinet of the laundry treating appliance.

Responsive to detection of a water leak, the laundry treating appliance may perform various actions. For instance, the laundry treating appliance may report the issue to the user. In another example, the laundry treating appliance may additionally or alternately take action to address the water leak. These actions may include, for instance, suspension of operation of the appliance (e.g., interrupt the water supply by operating the hot and cold shut-off valve until the leak condition is addressed by the user and/or by service personnel, and/or the sensor returning to a condition in which no leak is detected), upload of data from the appliance to a cloud server, initiation of a chat bot to allow the user to diagnose the issue, etc.

Some leak detection systems are based on conductivity or moisture-based sensors that are installed on the floor, such that responsive to a thin layer of water being established on the floor the system detects and reports the issue. However, such sensors require the installer to finetune the sensor location on the floor, imagining from where the water may leak and flow on the floor. Also, such systems may fail to take action to the appliance side, to prevent further water leakage.

As discussed in detail herein, an improved leak detection system for a laundry treating appliance system may be configured to address water leakage where it happens, in the locations/interfaces of the laundry treating appliance, thereby facilitating the process and efficiency of water leakage detection so that less water may pool on the floor up to the point the system is triggered. Moreover, the improved leak detection system may utilize sensors configured to identify potential leakage at points before water is on the floor, facilitating the identification of where water is leaking.

Thus, the disclosed system provides a well-integrated solution that takes action to stop the water leakage, which again minimizes the water on the floor. These actions may include, for example, if a leakage happens in the inlet side the cycle will stop and a shut off valve will interrupt the water supply. These actions may also include, if a leakage occurs in the drain hose interface with the drain pipe the drain pump may be turned off. These actions may also include if a leakage occurs around the door, in horizontal access washers, or even underneath the cabinet, the cycle may be stopped and all the water may be drained out. These actions may also include, the user being warned by a message in a mobile application on the user's mobile device informing the user that a problem is occurring, as well as optionally suggestion by a chat bot or otherwise illustrating the actions that can be taken to address the leakage.

In one or more embodiments, a method for water leakage detection is provided. The method includes receiving sensor data from one or more water sensing devices to a computing device, the one or more water sensing devices being placed at different locations with respect to a laundry treatment appliance. The method further includes responsive to the sensor data indicating a leak, performing one or more corrective actions to address the leak.

In one or more embodiments, the one or more water sensing devices include a flexible base material and one or more pairs of electrodes configured to sense presence of water due to a change in electrical properties between the electrodes, and the method further includes wrapping the flexible base material around a hose or fitting for detecting water at that location.

In one or more embodiments, the one or more water sensing devices include a coupling configured to wrap around a hose or fitting, an absorbent material configured to absorb water leaking from the hose or fitting, and one or more electrodes configured to sense presence of water due to a change in electrical properties.

In one or more embodiments, the method further includes installing a drain hose to drain water from the laundry treatment appliance, the drain hose integrating at least a subset of the one or more water sensing devices at one or both ends of the drain hose.

In one or more embodiments, the method further includes a water supply hose to receive water from a water supply to the laundry treatment appliance, the water supply hose integrating one or more of the water sensing devices at one or both ends of the water supply hose.

In one or more embodiments, the one or more water sensing devices include a capsule configured to capture water from the water supply, and electrodes in the capsule to detect presence of water in the capsule, and the method further includes interrupting the water supply responsive to detection of presence of water in the capsule.

In one or more embodiments, the one or more water sensing devices include sensors placed in a tray below the laundry treatment appliance for catching water leaking from the laundry treatment appliance.

In one or more embodiments, the method further includes powering the one or more water sensing devices by the computing device via power cables.

In one or more embodiments, the method further includes powering the one or more water sensing devices wirelessly powered by radio frequency (RF) energy.

In one or more embodiments, the method further includes providing the RF energy by the computing device.

In one or more embodiments, the method further includes utilizing a chat bot service of a cloud server in communication with a mobile device of a user of the laundry treatment appliance to diagnose the leak.

In one or more embodiments, a system for water leakage detection is provided. The system includes one or more water sensing devices placed at different locations with respect to a laundry treatment appliance. The system further includes a computing device, in communication with the one or more water sensing devices, programmed to perform the operations of any one of the preceding methods.

In one or more embodiments, the computing device is integrated into the laundry treatment appliance.

In one or more embodiments, the computing device is separate from the laundry treatment appliance.

In one or more embodiments, the computing device is a cloud server in communication with the laundry treatment appliance over a communications network, the cloud server being programmed to utilize a chat bot service in communication with a mobile device of a user of the laundry treatment appliance to diagnose the leak.

### BRIEF DESCRIPTION OF THE DRAWINGS

FIG. 1 illustrates an example water management system for a laundry treatment appliance according to aspects of the present disclosure;
FIG. 2 illustrates further aspects of the flexible belt water sensing devices shown in FIG. 1;
FIG. 3 illustrates an alternate example water management system for the laundry treatment appliance utilizing wireless communication between the water sensing devices and the hub;
FIG. 4 illustrates further aspects of the wireless water sensing devices shown in FIG. 3;
FIG. 5 illustrates a further alternate example water management system for the laundry treatment appliance utilizing capsules having integrated water sensing devices as well as a drain hose with a built in processing unit;
FIG. 6 illustrates aspects of the absorbent coupling water sensing devices;
FIG. 7 illustrates an example cloud system for monitoring and addressing leak conditions at the laundry treatment appliance;
FIG. 8 illustrates an example process for use of the water management system for water leakage detection;
FIG. 9 illustrates an example usage of a chat bot to aid in the automated diagnosing of a leak detected at the laundry treatment appliance; and
FIG. 10 illustrates an example of a computing device for use in the performance of water leakage detection.

### DETAILED DESCRIPTION

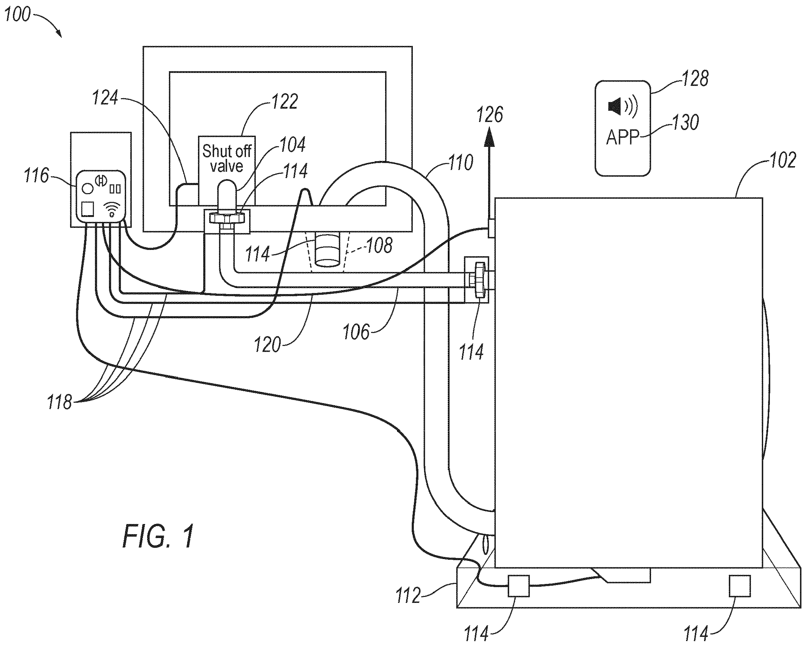

FIG. 1 illustrates an example water management system 100 for a laundry treatment appliance 102. As shown, the laundry treatment appliance 102 is coupled to a water supply 104 by a water supply hose 106 and to a drain 108 by a drain hose 110. A tray 112 may be placed below the laundry treatment appliance 102 to trap leaking water.

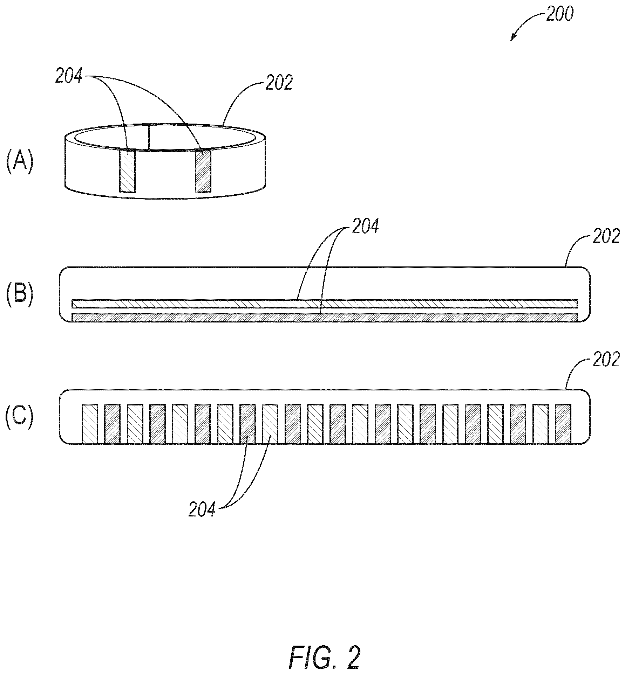

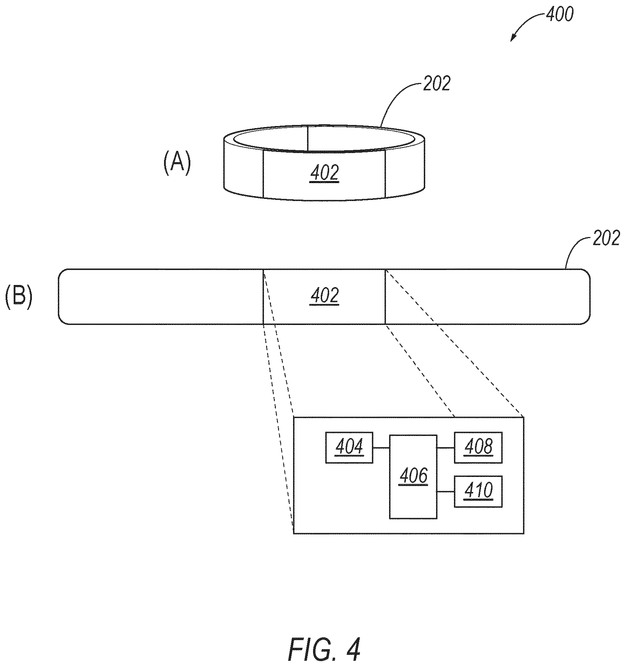

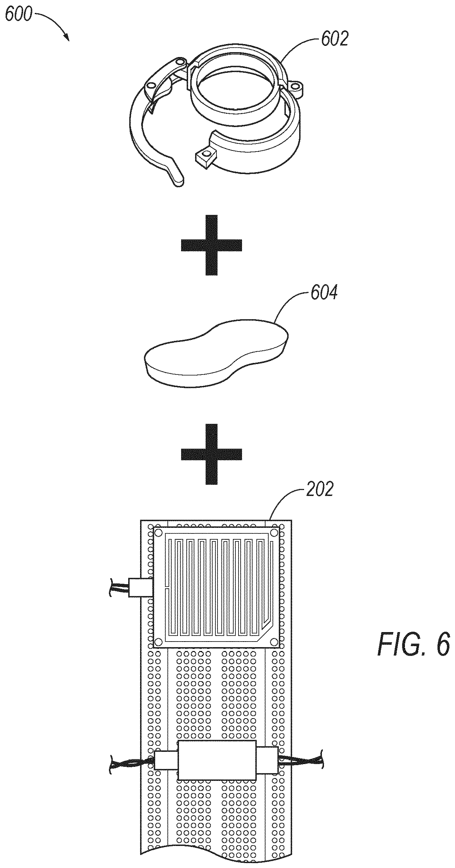

The water management system 100 may include water sensing devices 114 configured to allow for the detection of leak conditions. For instance, water sensing devices 114 in the form of flexible belts may be installed to the inlet and/or outlet connections of the laundry treatment appliance 102. These flexible belts may have built-in electrodes to facilitate the sensing of water. Further aspects of the design of the flexible belt water sensing devices 114 are discussed with respect to FIG. 2. An alternate design of the flexible belt water sensing devices 114 is discussed with respect to FIG. 4. As another possibility, absorbent coupling water sensing devices 114 may be installed to the inlet and/or outlet connections of the laundry treatment appliance 102. Further aspects of the design of the absorbent coupling water sensing devices 114 are discussed with respect to FIG. 6. Water sensing devices 114 may additionally be installed into the tray 112 to detect the occurrence of water in the tray 112. For instance, these water sensing devices 114 may be conductively sensors placed on the surface of the tray 112.

The water management system 100 may further include a hub 116 configured to power the water sensing devices 114. The hub 116 may be plugged into an outlet or other source of electrical power and may convert the electric current from the outlet to the correct voltage, current, and frequency to power the water sensing devices 114. For instance, power cables 118 may be run between the hub 116 and the water sensing devices 114 to allow the hub 116 to provide power to the water sensing devices 114.

Further variations on the water management systems 100 are possible. For instance, in some examples the hub 116 may be integrated into the laundry treatment appliance 102. In such an example, an internal circuit board of the laundry treatment appliance 102 may act as the hub 116 for the water sensing devices 114 and the shut off valve 122, connecting to them via a wireless technology such as BLUETOOTH low energy. The water sensing devices 114 in such an example may be battery powered, for instance. The internal board may also communicate with the mobile device 128 for providing warnings and reports. Such a variation may improve simplicity of installation, keeping the water sensing devices 114 and the shut off valve 122 as system elements for install, delivering a high level of integration and simplicity.

The hub 116 may also be configured to communicate information with the laundry treatment appliance 102. For instance, a communication cable 120 may be connected between the hub 116 and the laundry treatment appliance 102 to allow the hub 116 to receive information from the laundry treatment appliance 102 as well as send commands to the laundry treatment appliance 102 for execution by the laundry treatment appliance 102.

The water management system 100 may further include a shut off valve 122 configured to interrupt the water supply 104 in case of a leakage on the inlet side. The shut off valve 122 may be implemented, in an example, as a normally-closed valve that requires power to be in the open position. In an example, the shut off valve 122 may be driven by the hub 116 using a control cable 124 configured to power the valve 122 when water is desired from the water supply 104, and to unpower the valve 122 to interrupt the water supply 104, such as upon detection of a leak.

The laundry treatment appliance 102 may further include a service port 126. The service port 126 may be configured to allow for access to the laundry treatment appliance 102 for receiving fault codes or other information from the laundry treatment appliance 102. The service port 126 may also be used to send commands to the laundry treatment appliance 102.

A mobile device 128 may also be used to communicate with the laundry treatment appliance 102. The mobile device 128 may be a smartphone, tablet, watch, voice-controlled virtual assistant device, or other computing device with processing and communication features to allow for communication with the laundry treatment appliance 102. A monitoring application 130 may be installed to the mobile device 128. The monitoring application 130 may allow the mobile device 128 to receive alerts or other messages from the laundry treatment appliance 102, e.g., via the service port 126.

FIG. 2 illustrates further aspects of the flexible belt water sensing devices 114 shown in FIG. 1. The flexible belt water sensing device 114 may be formed of a strip of a nonconductive flexible base material 202, to which various conductive electrodes 204 may be embedded or otherwise attached. A change in capacitance, resistance, or other electrical properties between the electrodes 204 may be used to sense whether water is in the vicinity of the electrodes 204.

The flexible base material 202 may be solid or mesh material that allows for wrapping of the water sensing devices 114 around a fitting, tube, or pipe. As some examples, the nonconductive flexible base material 202 may be formed of a strip of polypropylene, nylon, polyethylene, or cloth. The flexible base material 202 may include a clasp, Velcro, or other mechanism to facilitate the fixing of the water sensing devices 114 to itself once wrapped around the fitting, tube, or pipe for which leakage is to be monitored.

As shown at (A), the flexible belt water sensing device 114 is shown in a wrapped position with a first layout of electrodes 204. In this layout, a pair of electrodes 204 are shown spaced apart along the length of the nonconductive flexible base material 202, such that a difference in electrical properties between the pair of electrodes 204 may be indicative of water leaking onto the water sensing device 114.

As shown at (B), the flexible belt water sensing device 114 is shown in a flat, unwrapped position with a second layout of electrodes 204. In this layout, the pair of electrodes 204 extend laterally along the length of the flexible base material 202, to provide a greater area of coverage for leakage detection. As shown at (C), an alternate flexible belt water sensing device 114 is shown in a flat, unwrapped position with a third layout of electrodes 204. In this layout, a series of multiple pairs of electrodes 204 extend laterally along the length of the flexible base material 202, also to provide a greater area of coverage for leakage detection.

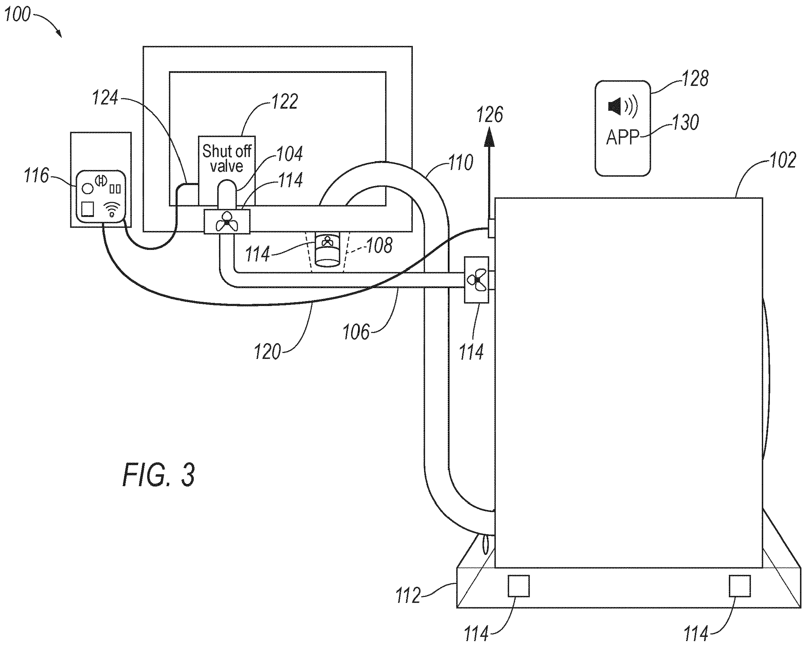

FIG. 3 illustrates an alternate example 300 water management system 100 for the laundry treatment appliance 102 utilizing wireless communication between the water sensing devices 114 and the hub 116. In the alternate example 300, the water sensing devices 114 may operate without wires. For instance, the water sensing devices 114 may be powered by small batteries. In another example, the water sensing devices 114 may be powered by an induced voltage generated by a magnetic field. This magnetic field may, in an example, be provided by the hub 116. Or, in another example, this magnetic field may be comprised of radio frequency (RF) radiation present in the vicinity of the laundry treatment appliance 102.

FIG. 4 illustrates further aspects 400 of the alternate wireless water sensing devices 114 shown in FIG. 3. As shown, the alternate wireless water sensing devices 114 includes a flexible base material 202 as discussed above. In addition, the alternate wireless water sensing devices 114 includes a processing unit 402 configured to wirelessly provide status information to the hub 116.

The processing unit 402 may include an energy capture circuit 404 (e.g., one or more antennas) to capture ambient RF energy and a capacitor 406 to store the RF energy. The wireless water sensing devices 114 may further include a processor 408 configured to operate a measurement reporting cycle periodically and/or responsive to the capacitor 406 reaching adequate charge to perform the cycle. For instance, once charged up, the capacitor 406 may power the processor 408 to read data from electrodes 204 of the water sensing device 114 and to wirelessly transmit that information to the hub 116 using a transmitter 410. By using such an approach, the wireless water sensing devices 114 may be able to operate without need for wires or batteries.

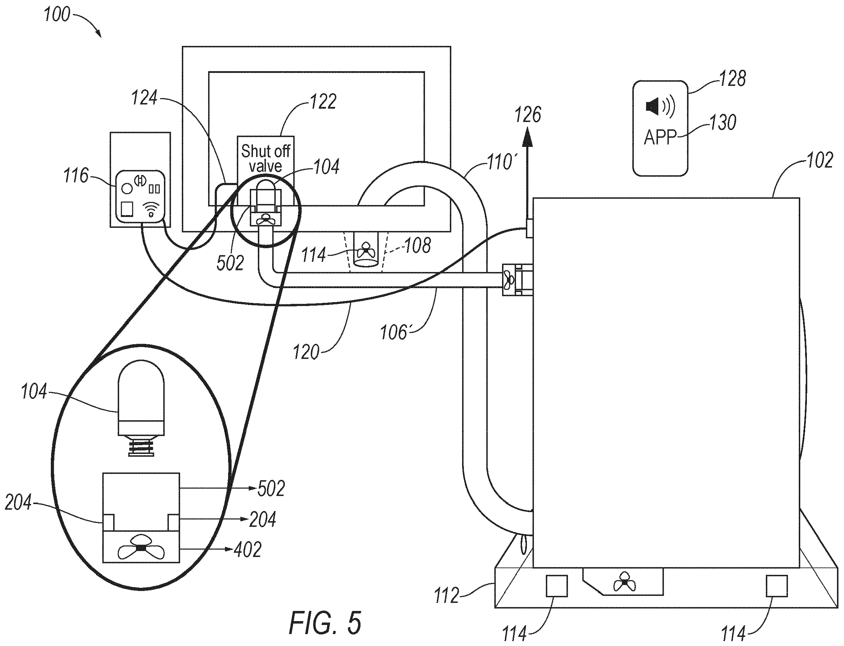

FIG. 5 illustrates a further alternate example 500 water management system 100 for the laundry treatment appliance 102 water sensing devices 114 integrated into an alternate water supply hose 106' as well as into an alternate drain hose 110'. With respect to the alternate water supply hose 106', a capsule 502 may be integrated into the end of the water supply hose 106 configured to connect to the water supply 104. With respect to the alternate drain hose 110', a processing unit 402 such as that discussed with respect to FIG. 4 may be integrated into the end of the drain hose 110 configured to mate with the drain 108.

Referring more specifically to the alternate water supply hose 106', the end of the alternate water supply hose 106' opposite the laundry treatment appliance 102 may be configured to attach to a downward-facing water supply 104. For instance, a threaded end of the alternate water supply hose 106' may be screwed onto a fitting of the water supply 104. The capsule 502 may be integrated into the end of the alternate water supply hose 106'. An open top of the capsule 502 may allow for installation of the alternate water supply hose 106' over the water supply 104, while the sides and bottom of the capsule 502 act as a cup to allow for the collection of water leakage from the connection of alternate water supply hose 106' to the water supply 104. Similar to as discussed with respect to FIG. 2, one or more pairs of electrodes 204 may be integrated into the capsule 502 to allow for the sensing of changes in capacitance, resistance, or other electrical properties between the electrodes 204 to sense whether water is in the capsule 502. Similar to as discussed with respect to FIG. 4, a processing unit 402 may be connected to the electrodes 204 to signal the hub 116 responsive to detection of water.

Referring more specifically to the alternate drain hose 110', the end of the alternate drain hose 110' opposite the laundry treatment appliance 102 may include an embedded water sensing device 114. Also similar to as discussed with respect to FIG. 4, this embedded water sensing device 114 may include a processing unit 402 and/or one or more electrodes 204 (not shown) to facilitate in the detection of a leak condition at the drain 108.

FIG. 6 illustrates an example 600 of aspects of the absorbent coupling water sensing devices 114. The absorbent coupling water sensing devices 114 may generally include a coupling 602, an absorbent material 604, and one or more electrodes 204 in contact with the absorbent material 604. The coupling 602 may be one of various types of hose clamp. The absorbent material 604 may be a sponge, cloth, or other material capable of absorbing water. As noted above, a change in capacitance, resistance, or other electrical properties between the electrodes 204 may be used to sense whether water is in the vicinity of the electrodes 204.

The absorbent coupling water sensing devices 114 may be used to secure the water supply hose 106 to the water supply 104 on one end and/or to secure the alternate water supply hose 106 to the laundry treatment appliance 102. The absorbent coupling water sensing devices 114 may also be used to secure the drain hose 110 to the drain 108 and/or to secure the drain hose 110 to the laundry treatment appliance 102.

The absorbent coupling water sensing devices 114 may be installed by attaching a hose to a fitting and closing the coupling 602 around the hose and the absorbent material 604 to secure the hose to the fitting. If there is a leakage of water, then the absorbent material 604 may capture that water, thereby changing the electrical properties between the electrodes 204. This change may accordingly signal the hub 116 responsive to detection of water.

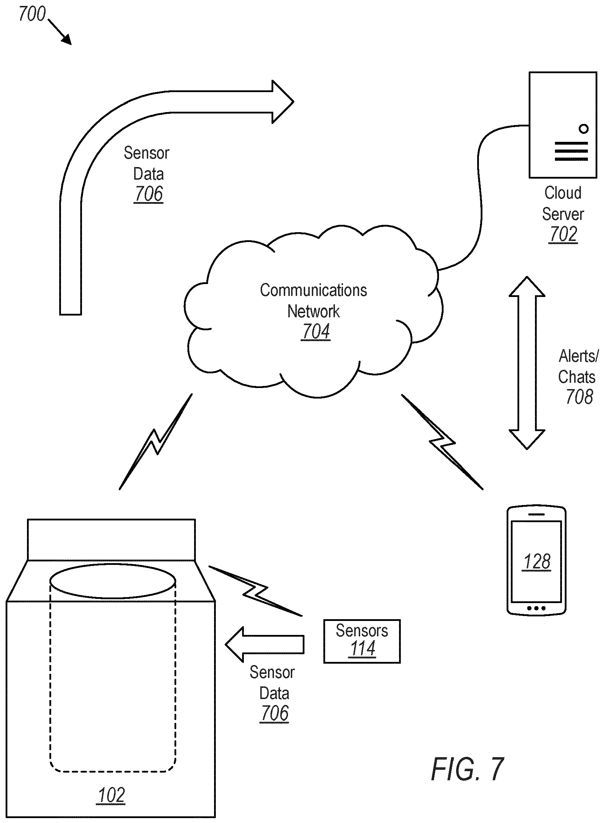

FIG. 7 illustrates an example cloud system 700 for monitoring and addressing leak conditions at the laundry treatment appliance 102. As shown, the cloud system 700 includes the laundry treatment appliance 102 in communication with a cloud server 702 over a communications network 704.

The cloud server 702 may be a computing device configured to maintain information and communicate with the laundry treatment appliance 102 over the communications network 704. The communications network 704 may be configured to provide communications services, such as packet-switched network services (e.g., Internet access, voice over Internet Protocol (VoIP) communication services), to devices connected to the communications network 704. An example of a communications network 704 is a cellular telephone network. For instance, the cloud server 702 and the laundry treatment appliance 102 may access the cellular network via connection to one or more cellular towers.

The laundry treatment appliance 102 may be configured to send sensor data 706 from the laundry treatment appliance 102 (and/or the hub 116) to the cloud server 702 over the communications network 704. The sensor data 706 may include information received from the water sensing devices 114. For instance, the sensor data 706 may indicate, for each of the water sensing devices 114 whether or not water was sensed by the respective water sensing device 114.

The cloud server 702 may be configured to receive the sensor data 706. In an example the cloud server 702 may maintain the sensor data 706 in a data store in association with an identifier of the laundry treatment appliance 102 (and/or the hub 116) sending the sensor data 706. The cloud server 702 may also maintain account information, such as indication of which the mobile device 128 correspond to which laundry treatment appliances 102.

The cloud server 702 may be further configured to analyze the sensor data 706 to determine whether a user of the laundry treatment appliance 102 should be sent an alert or chat 708. For instance, if the sensor data 706 indicates the presence of water at one or more of the water sensing devices 114, then the cloud server 702 may send an alert or chat 708 to the mobile device 128 corresponding to the user of the laundry treatment appliance 102. This may allow the user of the mobile device 128 to be alerted of the leak condition, and, in some cases, to diagnose and address the leak condition without requiring an on-site service visit.

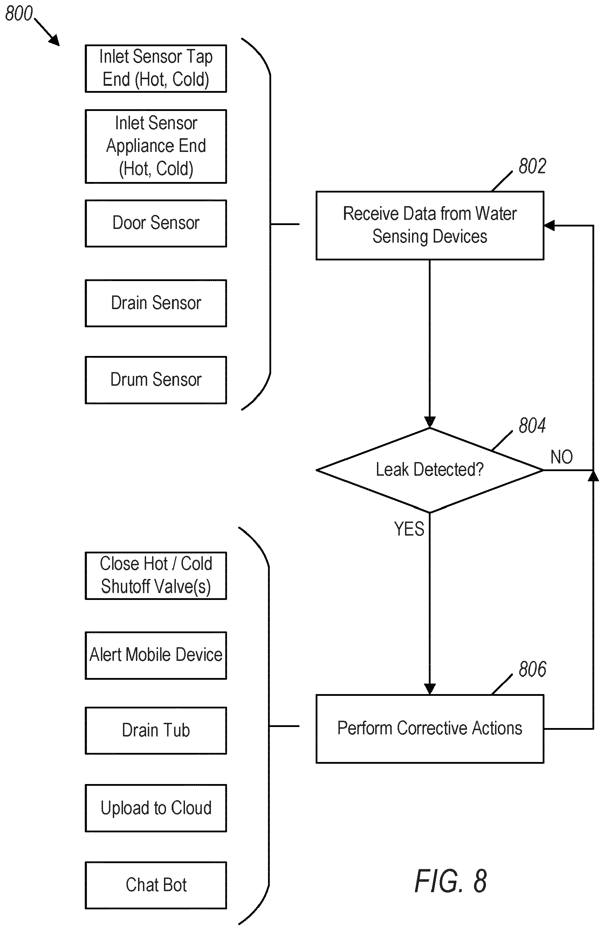

FIG. 8 illustrates an example process 800 for use of the water management system 100 for water leakage detection. In an example, the process 800 may be performed by one of the water management system 100 embodiments discussed in detail herein.

At operation 802, sensor data 706 is received from the water sensing devices 114. The sensor data 706 may be received to a hub 116 separate from the laundry treatment appliance 102 in an example. The sensor data 706 may be received to a hub 116 integrated with the laundry treatment appliance 102 in another example. The sensor data 706 may be received from one or more of: an inlet water sensing device 114 at the tap end, an inlet water sensing device 114 at the laundry treatment appliance 102 end, a water sensing device 114 at the door of a horizontal access laundry treatment appliance 102, a water sensing device 114 at the drain 108 a water sensing device 114 under the drum, etc. The water sensing devices 114 may be of one or more of the designs discussed above, either powered via power cables 118 or powered via RF. The sensor data 706 may be indicative of whether water is leaking at the respective sensed locations.

At operation 804, it is determined whether a leak condition is indicated by the received sensor data 706. In an example, the hub 116 and/or the cloud server 702 uses the sensor data 706 to determine whether a leak condition is indicated. If the sensor data 706 indicates a leak condition, control passes to operation 806 to address the condition. If no leak condition is detected, control returns to operation 802.

At operation 806, one or more corrective actions are performed responsive to detection of the leak condition. These corrective actions may include, for example, closing the shut off valve 122 to prevent further water leakage, draining the tub of the laundry treatment appliance 102, sending an alert to the monitoring application 130 executed by the mobile device 128, uploading the sensor data 706 to the cloud server 702 (if it has not already been sent), and/or initiating a session with a chat bot to inform the user of the leak, diagnose the leak, and/or correct the leak condition. In some examples, the alert or chat 708 may indicate to the user the location of the leak. After operation 806, control returns to operation 802.

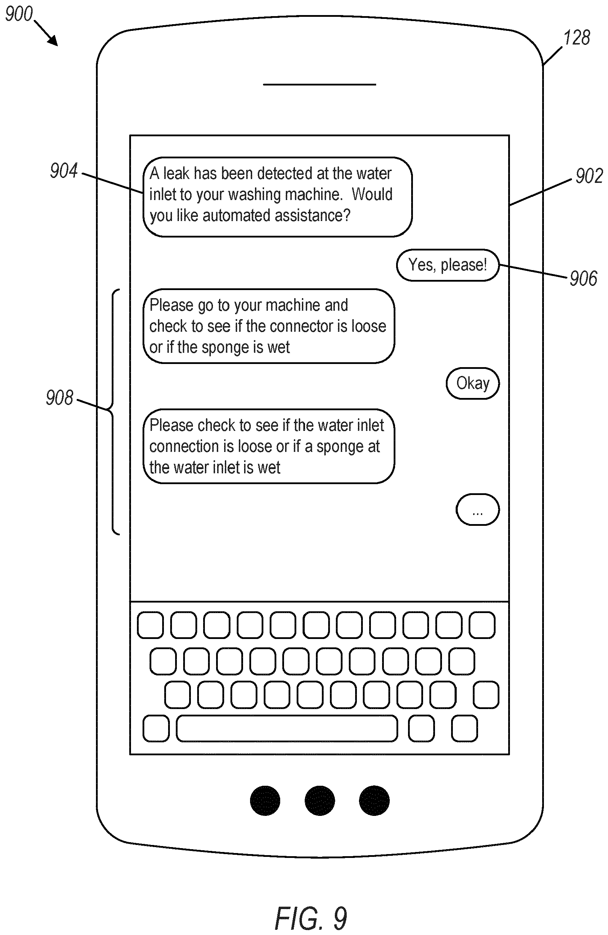

FIG. 9 illustrates an example 900 usage of a chat bot service to aid in the automated diagnosing of a leak detected at the laundry treatment appliance 102. As shown the mobile device 128 is displaying a chat screen 902 of an application that may be used for sending messages between a user of the laundry treatment appliance 102 and the chat bot. In an example, the application may be the monitoring application 130 discussed above. In another example, the application may be a short message service (SMS) chat application or other chat application. The chat bot service may be executed, in an example, by the cloud server 702 in communication with the laundry treatment appliance 102 and the mobile device 128 over the communications network 704.

The chat screen 902 may be used to show the alerts or chats 708 to the user of the mobile device 128 corresponding to the laundry treatment appliance 102. As illustrated in the example 900, the mobile device 128 shows an alert 904 that is received to the mobile device 128 responsive to detection of a leak by one of the water sensing devices 114. The alert 904 may indicate to the user that a leak occurred. The alert 904 may also indicate where the leak was detected, for example, based on which of the water sensing devices 114 sensed the leak. The alert 904 may also include a call to action, asking the user if assistance is requested.

As shown, the alert 904 asks the user if assistance is needed. If the user replies with an affirmative response (such as yes, okay, sure, etc.), then, as shown at 906, this response may be sent by the mobile device 128 to the chat bot service on the cloud server 702 (e.g., via SMS).

Responsive to the receipt of the affirmative reply to the chat bot service of the cloud server 702, the chat bot service may proceed to attempt to diagnose and resolve the issue with the laundry treatment appliance 102. For instance, the chat bot service may proceed through a troubleshooting decision tree of questions based on the answers received from the user of the mobile device 128. While the illustrated example 900 shows textual questions being asked of the user, it should be noted that the chat bot may be able to send images to the user (e.g., via multimedia messaging service (MMS)) as well to illustrate the questions or other diagnostics being performed.

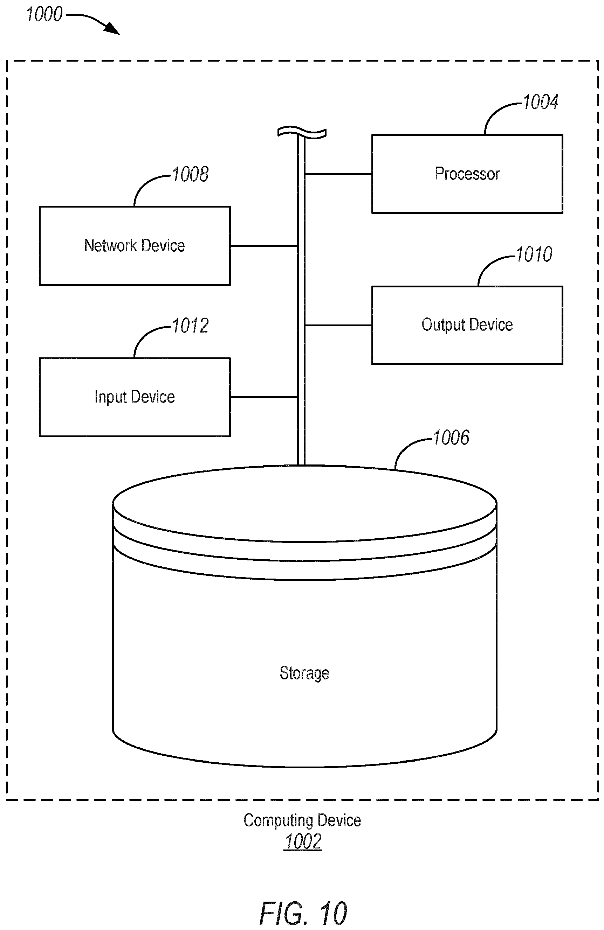

FIG. 10 illustrates an example 1000 of a computing device 1002 for use in the performance of water leakage detection. Referring to FIG. 10, and with reference to FIGS. 1-9, the water sensing devices 114 and hub 116 may be examples of such computing devices 1002. As shown, the computing device 1002 may include a processor 1004 that is operatively connected to a storage 1006, a network device 1008, an output device 1010, and an input device 1012. It should be noted that this is merely an example, and computing devices 1002 with more, fewer, or different components may be used.

The processor 1004 may include one or more integrated circuits that implement the functionality of a central processing unit (CPU) and/or graphics processing unit (GPU). In some examples, the processors 1004 are a system on a chip (SoC) that integrates the functionality of the CPU and GPU. The SoC may optionally include other components such as, for example, the storage 1006 and the network device 1008 into a single integrated device. In other examples, the CPU and GPU are connected to each other via a peripheral connection device such as Peripheral Component Interconnect (PCI) express or another suitable peripheral data connection. In one example, the CPU is a commercially available central processing device that implements an instruction set such as one of the x86, ARM, Power, or Microprocessor without Interlocked Pipeline Stages (MIPS) instruction set families.

Regardless of the specifics, during operation the processor 1004 executes stored program instructions that are retrieved from the storage 1006. The stored program instructions, accordingly, include software that controls the operation of the processors 1004 to perform the operations described herein. The storage 1006 may include both non-volatile memory and volatile memory devices. The non-volatile memory includes solid-state memories, such as Not AND (NAND) flash memory, magnetic and optical storage media, or any other suitable data storage device that retains data when the system is deactivated or loses electrical power. The volatile memory includes static and dynamic random-access memory (RAM) that stores program instructions and data during operation of the water management system 100.

The GPU may include hardware and software for display of at least two-dimensional (2D) and optionally three-dimensional (3D) graphics to the output device 1010. The output device 1010 may include a graphical or visual display device, such as an electronic display screen, projector, printer, or any other suitable device that reproduces a graphical display. As another example, the output device 1010 may include an audio device, such as a loudspeaker or headphone. As yet a further example, the output device 1010 may include a tactile device, such as a mechanically raisable device that may, in an example, be configured to display braille or another physical output that may be touched to provide information to a user.

The input device 1012 may include any of various devices that enable the computing device 1002 to receive control input from users. Examples of suitable input devices that receive human interface inputs may include keyboards, mice, trackballs, touchscreens, voice input devices, graphics tablets, and the like.

The network devices 1008 may each include any of various devices that enable the water sensing devices 114 and hub 116 to send and/or receive data from external devices over networks (such as the communications network). Examples of suitable network devices 1008 include an Ethernet interface, a Wi-Fi transceiver, a cellular transceiver, a satellite transceiver, or a BLUETOOTH or BLUETOOTH Low Energy (BLE) transceiver, or other network adapter or peripheral interconnection device that receives data from another computer or external data storage device, which can be useful for receiving large sets of data in an efficient manner.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

While exemplary embodiments are described above, it is not intended that these embodiments describe all possible forms of the disclosure. Rather, the words used in the specification are words of description rather than limitation, and it is understood that various changes may be made without departing from the spirit and scope of the disclosure. Additionally, the features of various implementing embodiments may be combined to form further embodiments of the disclosure.

## Claims

1. A method for water leakage detection for a laundry treatment appliance (102),
comprising:
receiving sensor data (706) from one or more water sensing devices (114) to a computing device (1002), the one or more water sensing devices (114) being placed at different locations with respect to the laundry treatment appliance (102); and
responsive to the sensor data (706) indicating a leak, performing one or more corrective actions to address the leak.

2. The method of claim 1, wherein the one or more water sensing devices (114) include a flexible base material (202) and one or more pairs of electrodes (204) configured to sense presence of water due to a change in electrical properties between the electrodes (204), further comprising wrapping the flexible base material (202) around a hose or fitting for detecting water at that location.

3. The method of claim 1, wherein the one or more water sensing devices (114) include a coupling (602) configured to wrap around a hose or fitting, an absorbent material (604) configured to absorb water leaking from the hose or fitting, and one or more electrodes (204) configured to sense presence of water due to a change in electrical properties.

4. The method of any of previous claims, further comprising installing a drain hose (110) to drain water from the laundry treatment appliance (102), the drain hose (110) integrating at least a subset of the one or more water sensing devices (114) at one or both ends of the drain hose (110).

5. The method of any of previous claims, further comprising installing a water supply hose (106) to receive water from a water supply (104) to the laundry treatment appliance (102), the water supply hose (106) integrating one or more of the water sensing devices (114) at one or both ends of the water supply hose (106).

6. The method of claim 5, wherein the one or more water sensing devices (114) include a capsule (502) configured to capture water from the water supply (104), and electrodes (204) in the capsule (502) to detect presence of water in the capsule (502), and further comprising interrupting the water supply (104) responsive to detection of presence of water in the capsule (502).

7. The method of any of previous claims, wherein the one or more water sensing devices (114) include sensors placed in a tray (112) below the laundry treatment appliance (102) for catching water leaking from the laundry treatment appliance (102).

8. The method of any of previous claims, further comprising powering the one or more water sensing devices (114) by the computing device (1002) via power cables (118).

9. The method of any of claims 1 to 7, further comprising powering the one or more water sensing devices (114) wirelessly powered by radio frequency (RF) energy.

10. The method of claim 9, further comprising providing the RF energy by the computing device (1002).

11. The method of any of previous claims, further comprising utilizing a chat bot service of a cloud server (702) in communication with a mobile device (128) of a user of the laundry treatment appliance (102) to diagnose the leak.

12. A system for water leakage detection, comprising:
one or more water sensing devices (114) placed at different locations with respect to a laundry treatment appliance (102); and
a computing device (1002), in communication with the one or more water sensing devices (114), programmed to perform the operations (802, 804, 806) of any one of claims 1-11.

13. The system of claim 12, wherein the computing device (1002) is integrated into the laundry treatment appliance (102).

14. The system of claim 12, wherein the computing device (1002) is separate from the laundry treatment appliance (102).

15. The system of claim 12, wherein the computing device (1002) is a cloud server (702) in communication with the laundry treatment appliance (102) over a communications network (704), the cloud server (702) being programmed to utilize a chat bot service in communication with a mobile device (128) of a user of the laundry treatment appliance (102) to diagnose the leak.
